**Europäisches Patentamt**

(19) **European Patent Office**

**Office européen des brevets**

(11) Publication number: **0 370 071 B1**

(12) # EUROPEAN PATENT SPECIFICATION

(45) Date of publication of patent specification :
02.12.92 Bulletin 92/49

(51) Int. Cl.⁵ : **G02B 5/08**, G02B 5/28

(21) Application number : **88910402.2**

(22) Date of filing : **02.09.88**

(86) International application number :
**PCT/US88/03045**

(87) International publication number :
**WO 89/02607 23.03.89 Gazette 89/07**

(54) **PARTLY TRANSPARENT MIRROR FOR A RING LASER GYRO.**

(30) Priority : **11.09.87 US 96130**

(43) Date of publication of application :
**30.05.90 Bulletin 90/22**

(45) Publication of the grant of the patent :
**02.12.92 Bulletin 92/49**

(84) Designated Contracting States :
**DE FR GB IT**

(56) References cited :
**EP-A- 0 228 042**
**US-A- 3 579 130**
**US-A- 4 147 409**
**Patent Abstracts of Japan, vol. 11, no. 144, (P-574)(2591), 12 May 1987 & JP A 6128203**

(73) Proprietor : **Litton Systems, Inc.**
**360 North Crescent Drive**
**Beverly Hills California 90210-9990 (US)**

(72) Inventor : **LU, Samuel**
**13635 Chesterfield Drive**
**Moorpark, CA 93021 (US)**
Inventor : **GROBSKY, Kevin, D.**
**2928 N. Fettlers Blvd.**
**Tallahassee, Florida 32304 (US)**

(74) Representative : **Godsill, John Kenneth et al**
**Haseltine Lake & Co. Hazlitt House 28**
**Southampton Buildings Chancery Lane**
**London WC2A 1AT (GB)**

## Description

Field of the Invention

This invention relates to ring laser gyros, and more particularly, to an improved partly transparent mirror for use as an output corner mirror in a ring laser gyro.

Background of the Invention

Ring Laser Gyros have two or more beams of coherent light propagated in opposite directions, along different effective path lengths, around a ring laser cavity filled with laser gas. A preferred gas is a helium-neon mixture. See, United States Patent No. 3,382,758 which issued May 14, 1968 to Wang, entitled "Ring Laser Having Frequency Offsetting Means Inside Optical Path." It comprises at least three corner mirrors, one partly transparent, positioned at the vertices of a polygon to define a laser cavity. The laser cavity carries a lasing gas, frequently an energized helium-neon mixture, to produce coherent counter-propagating laser light beams. The nominal frequency of the laser depends upon the energy produced by allowed energy transitions in the laser gas. Once laser oscillation occurs in the systems, at frequencies supported by the cavity, the difference in the lengths of the pathways traversed by the counter-propagating beams, during rotation of the ring laser about its sensing axis, produces light of differing frequencies. The two beams are beat against each other, producing a heterodyned difference or beat frequency which produces interference fringes that are sensed by a photodetector, amplified by an amplifier, and counted. The fringe count per unit of time is a measure of the angular velocity of the ring laser about its sensing axis.

The sensitivity of a ring laser to the earth's magnetic field, the direction of propagation of the beams, and the ellipticity of the cross-section of the light beams is known and can be corrected. See United States Patent 4,213,705, which issued July 22, 1980 to Virgil Sanders, entitled "Four Mode Zeeman Laser Gyroscope With Minimum Hole Burning Competition."

US-A-4 147 409 shows an example of the use of a stack of quarter wave and non-quarter wave films to produce a reflective surface in a laser.

Ideally the beams of a planar two mode ring laser gyro are linearly polarized. Birefringence of the corner mirrors, a non-planar beam path, different reflectivity of the mirrors to differently polarized beams, and the Faraday effect all introduce errors.

Non-planar multimode ring laser gyros produce circularly polarized beams. Portions of the beams are extracted through a partly transparent corner mirror, and the extracted beams produce a most accurate measurement if their polarizations are undistorted.

According to the present invention, there is provided a partly transparent mirror for use in a ring laser gyro operable with a beam incident on the mirror in a predetermined direction and at a predetermined optical wave length, the mirror having a substrate with at least three optical film stacks positioned thereon, said first optical film-stack having a plurality of optical films of alternate high index of refraction films and lower index of refraction films upon said substrate, each film of said first film-stack having a thickness that is substantially one quarter of said predetermined wavelength;

said second optical film-stack having a second plurality of optical films of alternate high index of refraction films and lower index of refraction films, positioned upon said first film-stack, each film of said second film-stack having a thickness that is other than one quarter of said predetermined wavelength;

said third optical film-stack having a plurality of optical films of alternate high index of refraction films and lower index of refraction films upon said second optical stack, each film of said third film-stack having a thickness that is substantially one quarter of said predetermined wavelength;

the thickness of each said film being measured along said predetermined direction.

The inventor discovered that modifying the partly transmissive output corner mirror improves the accuracy of a non-planar multimode ring laser gyro. Particular film-stacks of alternate layers of titania or titanium dioxide and silica or silicon dioxide transmit circularly polarized light with almost zero distortion.

It should be explained that P-polarized light is the light which has its electrical field parallel to the plane of incidence. S-polarized light has its electrical field perpendicular to the plane of incidence. The transmission ratio is defined as Tp/Ts. An ideal partly transmissive corner mirror has a small, or preferably zero, phase retardation between S and P polarized lights upon reflection and a low ratio, preferably one, between S-polarization and P-polarization transmissions.

A specialized partly transparent mirror of one embodiment comprises a mirror with the following structure. The mirror comprises a substrate base, such as Zerodur (a low thermal expansion glass manufactured by Schoot Corporation of Maine, West Germany) which is coated with a first quarter wave film-stack of a first set of a plurality of alternate layers. The first film-stack is made from quarterwave of the beam wave length thick alternate layers of $TiO_2$ (Titania) and $SiO_2$ (Silica). The Titania layers are characterized by a relatively high refractive index n of 2.32, while the Silica layers are of a relatively lower refractive index n of 1.46. By providing a qarterwave of the beam wave length film-stack of relatively high and relatively low refractive indices alternate layers, the first quarterwave film-stack provides a highly reflective film-stack.

The first quarterwave film-stack is coated with a second non-quarterwave film-stack of a second set of a plurality of alternate layers. As the term implies, these alternate layers are of a thickness other than one-quarterwave length film-stack. The second non-quarterwave film-stack set of coated alternate layers produces an interference effect which makes the Tp/Ts ratio approach one and phase retardation approach zero.

The second non-quarterwave film-stack is sandwiched between the first quarterwave film-stack and a third qarterwave film-stack, for adjusting mirror transmittance, of a third set of a plurality of alternately high and low refractive materials (Titania and Silica). This third quarterwave film-stack is covered by a double quarterwave protective layer of Silica.

The first and third quarterwave film-stacks each produce a highly reflective surface near the reference wave length (6328 Angstroms for a Helium Neon Laser), each quarterwave film-stack forms a high reflector with low transmittance, where the Tp/Ts ratio is high. For example, the Tp/Ts ratio of one quarterwave film-stack is around thirty, for a forty degree angle of incidence of the beams on the corner mirror.

It is desired to provide only a very small transmittance through the output mirror. The average transmittance ($T_{ave} = (T_p + T_s)/2$) is usually about 0.01% of the incident beam. Ideally both phase retardation should be zero and the Tp/Ts ratio should be one. The ideal is approached by the coating design of this invention, which requires that a non-quarterwave film-stack (preferably each of the alternate layers being less than one-quarterwave length in thickness) be sandwiched between at least two quarterwave film-stack layers. The special partly transparent mirror for a non-planar multimode ring laser gyro is built by sandwiching a non-quarterwave film-stack between two quarterwave film-stacks to increase the S-polarization transmission and reduce the P-polarization transmission, so that the Tp/Ts ratio can approach one.

Brief Description of the Drawings

Figure 1 shows a diagrammatic view of a ring laser gyro which includes a partly transparent mirror.

Figure 2 is a block diagram for illustrating the construction of the mirror, with emphasis on the arrangement of its film stacks.

Figure 3 is a diagram showing reflectivity (R) plotted against the wave length of the beam incident on the corner mirrors.

Detailed Description of the Preferred Embodiment

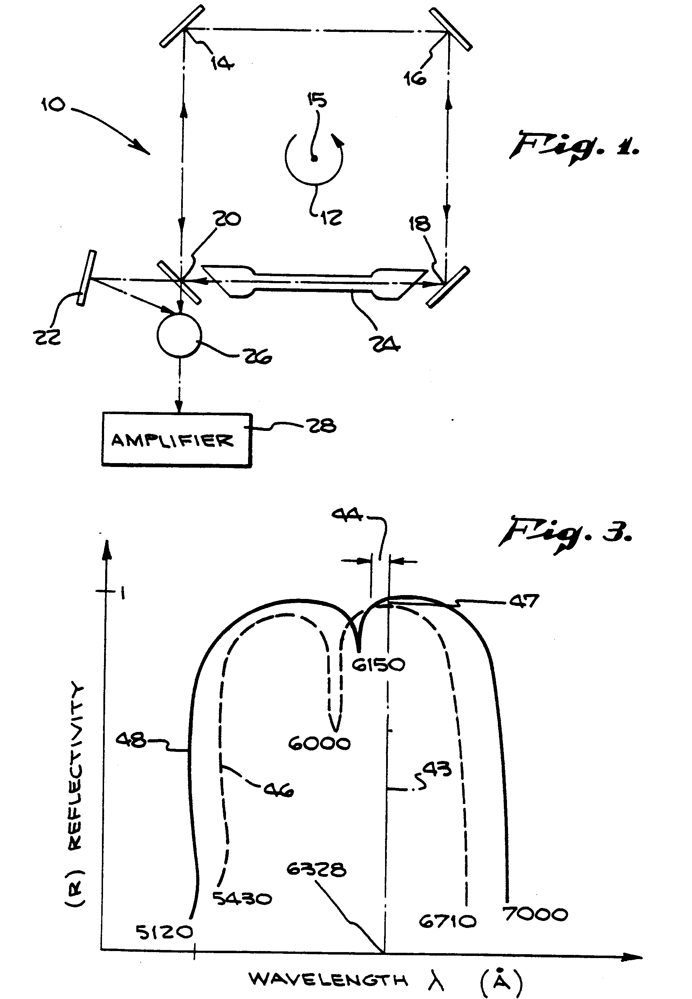

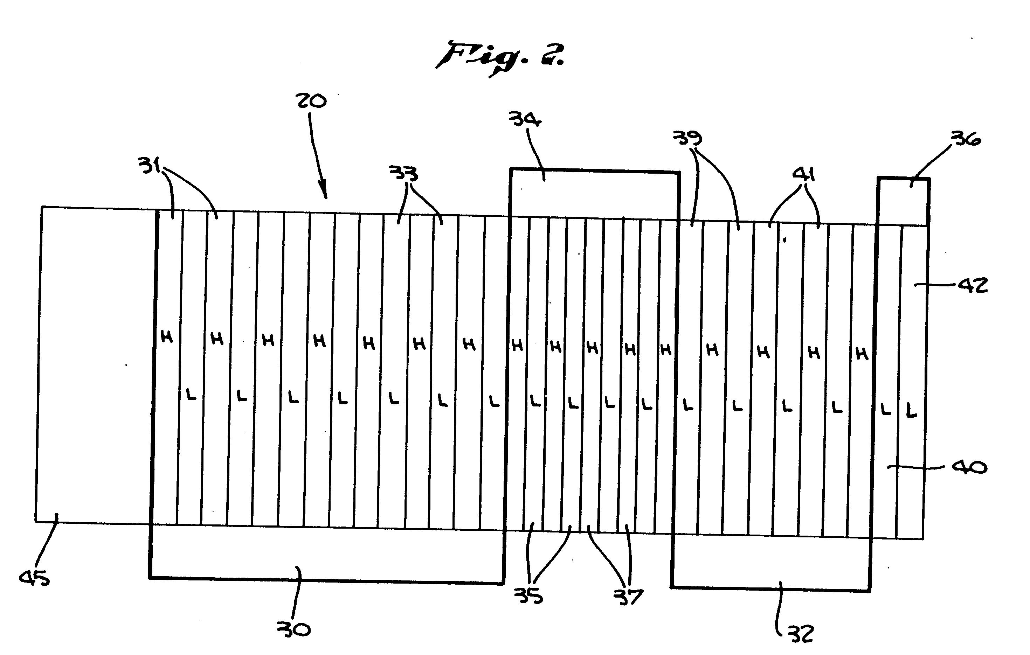

Referring to Figure 1, a ring laser gyro 10 measures the amount of angular rotation, shown by arrow 12, about the gyro sensing axis 15. In a planar ring laser gyro, the sensing axis 15 is perpendicular to the plane of the ring laser 10. Counter-clockwise directed coherent light beam is reflected around the laser 10 from corner mirror 20 onto corner mirror 18 onto corner mirror 16, thence onto corner mirror 14, and onto and extracted through the corner mirror 20. The extracted counter-clockwise laser beam is detected by the photodetector 26 whose signal is delivered to the amplifier 28.

A clockwise laser beam is reflected around the laser 10 from the corner mirror 20, onto reflecting corner mirror 14, onto corner mirror 16, onto corner mirror 18, thence onto corner mirror 20. A portion of the clockwise coherent light beam is extracted through the partly transmissive corner mirror 20 onto the reflective mirror 22, thence to the photodetector 26. The detector 26 converts the beam to an electrical signal and delivers it to the amplifier 28, where the clockwise and counterclockwise rotating laser signals are compared and mixed.

The heterodyning of the two signals in the amplifier 28 produces a beat signal which is a measure of the rotation 12 experienced by the ring laser gyro 10. The beat frequency which may be interpreted to produce an accurate measurement of angular rotation rate.

The partly transparent output corner mirror 20 is constructed to assure that it operates to reduce or eliminate distortion of the circularly polarized beams which pass therethrough and onto the photo detector, thereby enhancing performance of the ring laser gyro.

The preferred stacked-film mirror 20 is configured as shown in Figure 2. The flat planar mirror 45 may be made from a dense, preferably rigid and dimensionally stable,substrate 45. The substrate is preferably made from the material trademarked, "Zerodur."

The ring laser preferably uses a helium-neon mixture for a laser gas, producing a zero-angular-velocity laser operating frequency, $\omega_o$. The frequency is frequently at a wavelength of 5328 Angstroms. The thicknesses, described as measured in wavelengths, are expressed in fractions of wavelengths at the laser operating frequency.

In the following discussion, the preferred high index of refraction material is titania, $TiO_2$, having a nominal n= 2.32. The preferred low index of refraction material is silica, $SiO_2$, having a nominal n= 1.46.

Positioned on the substrate 45 is a quarterwave optical film-stack 30 which, in the preferred embodiment, is comprised of fourteen (numbers 1-14)quarterwave thick films of alternate first high (H) index of refraction films 31 and second low (L) index of refraction films 33.

Positioned on the quarterwave film-stack 30 is a second non-quarterwave optical film-stack 34 which, in the preferred embodiment, is made from alternate high (H) index of refraction and low(L) indices of refraction layers 37 and 35. There are preferably nine films (numbers 15-23)in film-stack 34, and each film 37 and 35 has a thickness of less than one quarterwave length of the reference signal frequency, $\omega_o$. A preferred thickness of the films 35 and 37 is from 0.624 to 0.868 of a quarterwave.

The following table is a list of the nine less than quarterwave films (numbers 15-23)in a stack wherein the outer films,15 and 23, are of titanium dioxide.

| FILM NO. | THICKNESS (IN QUARTERWAVES) |
|---|---|
| 15 | 0.778 |
| 16 | 0.841 |
| 17 | 0.671 |
| 18 | 0.624 |
| 19 | 0.814 |
| 20 | 0.868 |
| 21 | 0.771 |
| 22 | 0.698 |
| 23 | 0.857 |

A third film-stack 32 of, preferably eight (numbers 24-31), alternate high index of refraction films 41 and low index of refraction films 39, each film having a thickness of a quarterwave at the operating frequency, $\omega_o$, is positioned on the film-stack 34.

Two optical films 40 and 42 of the low index of refraction material (numbers 32-33) are stacked on the film-stack 32.

Thus, a partly transparent corner mirror 20 which is relatively insensitive to polarization orientation transmits relatively undistorted portions of the counter-propagating beams. Its ratio of transmission, $T_p/T_s$, is very close to one, and its phase retardation is close to zero.

Note that a conventional output mirror of prior art ring laser gyros, uses a quarterwave film-stack to produce a reflection characteristic, but they are characterized by a Tp/Ts ratio of around 30 with a phase retardation near zero. By the alternative stacking described above, wherein a non-quarterwave film-stack 34 is positioned between two quarterwave film-stacks 30 and 32 onto the mirror substrate 45, the mirror in this invention substantially reduces the Tp/Ts ratio (near 3) with a phase retardation of 0.5 degrees and an average transmission of (0.02%). (200 parts per million). The measurements of distortion were made at a 35 degree incident angle to the mirror.

Preferably the thickness of the film would be measured in the direction of the incoming beam. The design, for example, can be modified for 30 and 40 degrees angles of incidence. The smaller the angle of incidence of the beam, the thinner the films will be.

Figure 3 shows the manner in which the special output mirror 20 achieves the desired results. Figure 3 shows a graph of Reflectivity (R) against Wavelength ($\lambda$). Curve 46 is the P-Polarization curve, and curve 48 shows the S-Polarization curve for a mirror 20. At the desired wavelength $\lambda$, the apparatus displays a slightly lower reflectivity to allow the undistorted transmission of beams through the output mirror 20. (shown over the range 44) The optimum wavelength occurs at the point 47 where curves 46 an 48 almost coincide.

Thus, the improved ring laser gyro of this embodiment has a specially coated partly transparent output corner mirror 20 which both transmits and reflects the counter-propagating beams and transmits a part of each beam to a beam detector 26. The output of the detector is electrically delivered to the amplifier 28 with little or no distortion.

The appended claims are not intended to be limited to all the particular characteristics which are taught herein. For example, the particular number of films used in each quarterwave and non-quarterwave film-stack depend on the materials used.

## Claims

1. A partly transparent mirror for use in a ring laser gyro (10) operable with a beam incident on the mirror in a predetermined direction and at a predetermined optical wave length, the mirror having a substrate (45) with at least three optical film stacks (30, 34, 32) positioned thereon, said first optical film-stack (30) having a plurality of optical films of alternate high index of refraction films (31) and lower index of refraction films (33) upon said substrate (45), each film (31, 33) of said first film-stack having a thickness that is substantially one quarter of said predetermined wavelength;

   said second optical film-stack (34) having a second plurality of optical films of alternate high index of refraction films (37) and lower index of refraction films (37), positioned upon said first film-stack (30), each film (35, 37) of said second film-stack (34) having a thickness that is other than one quarter of said predetermined wavelength;

   said third optical film-stack (32) having a plurality of optical films of alternate high index of refraction films (41) and lower index of refraction films (39) upon said second optical stack (34), each film (39, 41) of said third film-stack having a thickness that is substantially one quarter of said predetermined wavelength;

   the thickness of each said film (31, 33, 35, 37, 39, 41) being measured along said predetermined direction.

2. The partly transparent mirror of claim 1, wherein each film (35, 37) of said second film-stack (34) has a thickness that is less than one quarterwave of said predetermined wavelength.

3. The partly transparent mirror of claim 1 or 2, said substrate (45) being made from thermally and mechanically stable material.

4. The partly transparent mirror of claim 3, wherein said substrate is of Zerodur material.

5. The partly transparent mirror of any one of the preceding claims, said material with a high index of refraction (31,37) comprising titania, and said material with a lower index of refraction (33,37) comprising silica.

6. The partly transparent mirror of any one of the preceding claims, comprising a protective film-stack (36) on said third film stack, having a plurality of films (40, 42), with at least the outer film of silica, forming at least one double film in which each film has a thickness that is substantially a quarter of said wavelength.

7. The partly transparent mirror of claim 6, wherein the protective film stack Is a stack of two films of silica (40), the protective film stack having a thickness that is substantially a double quarterwave.

8. The partly transparent mirror of any one of the preceding claims wherein:

   said first film stack (30) contains fourteen films with a thickness of substantially a quarter of the laser wavelength;

   said second film stack (34) contains nine films with a thickness that is less than a quarter of the laser wavelength; and

   said third film stack (32) contains eight films with a thickness that is substantially a quarter of the laser wavelength.

9. The partly transparent mirror of any one of the preceding claims wherein thicknesses of the films (37, 35) of said second film stack (34), recited consecutively from the film (37) adjacent said first film stack (30), are:

   0.778 quarterwave
   0.841 quarterwave
   0.671 quarterwave
   0.624 quarterwave
   0.814 quarterwave
   0.868 quarterwave

0.771 quarterwave

0.698 quarterwave

0.857 quarterwave.

10. A ring laser gyro having a resonant laser cavity, means (24) for counter propagating beams of a predetermined optical wavelength within said cavity, and a plurality of corner mirrors (14, 16, 18, 20), each having a transparent, dimensionally stable, thermally stable substrate (45), mounted within said laser cavity for directing beams around said laser cavity, at least one of said corner mirrors (20) being a partly transparent mirror to allow the passage of a portion of said beams out of said cavity, the partly transparent mirror being in accordance with any one of the preceding claims, the thickness of each film being measured in the direction of a predetermined incident beam of the gyro.

## Patentansprüche

1. Teildurchlässiger Spiegel für einen Ringlaserkreisel (10), bei dem ein Strahl bestimmter optischer Wellenlänge in einer vorgegebenen Richtung auf den Spiegel auftrifft, welcher Spiegel ein Substrat (45) mit wenigstens drei darauf angeordneten optisch wirksamen Filmstapeln (30, 34, 32) aufweist, wobei der erste optische Filmstapel (30) aus einer Mehrzahl von optischen Filmen besteht, die abwechselnd aus Filmen (31) mit hohem Brechungsindex und Filmen (33) mit niedrigerem Brechungsindex bestehen, und jeder Film (31, 33) des ersten Filmstapels eine Dicke aufweist, die im wesentlichen einem Viertel der bestimmten Wellenlänge entspricht;

der zweite optische Filmstapel (34), der auf dem ersten Filmstapel (30) angeordnet ist, eine zweite Mehrzahl von optischen Filmen aufweist, die abwechselnd aus Filmen (37) mit hohem Brechungsindex und Filmen (35) mit niedrigerem Brechungsindex bestehen, wobei jeder Film (35, 37) des zweiten Filmstapels (34) eine Dicke aufweist, die nicht einem Viertel der bestimmten Wellenlänge entspricht;

der dritte auf dem zweiten angeordnete optische Filmstapel (32) eine Mehrzahl von optischen Filmen aufweist, die abwechselnd aus Filmen (41) mit hohem Brechungsindex und Filmen (39) mit niedrigerem Brechungsindex bestehen, wobei jeder Film (39, 41) des dritten Filmstapels eine Dicke aufweist, die im wesentlichen einem Viertel der bestimmten Wellenlänge entspricht, und wobei die Dicke jedes der Filme (31, 33, 35, 37, 39, 41) in der vorgegebenen Richtung gemessen wird.

2. Teildurchlässiger Spiegel nach Anspruch 1, bei dem jeder Film (35, 37) des zweiten Filmstapesl (34) eine Dicke aufweist, die geringer ist als ein Viertel der bestimmten Wellenlänge.

3. Teildurchlässiger Spiegel nach Anspruch 1 oder 2, bei dem das Substrat (45) aus thermisch und mechanisch stabilem Material besteht.

4. Teildurchlässiger Spiegel nach Anspruch 3, bei dem das Substratmaterial aus Zerodur besteht.

5. Teildurchlässiger Spiegel nach einem der vorstehenden Ansprüche, bei dem das Material mit hohem Brechungsindex (31, 37) Titandioxid und das Material mit niedrigem Brechungsindex (33, 37) Siliciumdioxid enthält.

6. Teildurchlässiger Spiegel nach einem der vorstehenden Ansprüche, mit einem auf dem dritten Filmstapel angeordneten Schutzfilmstapel (36) mit einer Mehrzahl von Filmen (40, 42), von denen zumindest der äußere Film aus Siliciumdioxid besteht und die wenigstens eine doppellagige Filmschicht bilden, bei welcher jeder Film eine Dicke aufweist, die im wesentlichen einem Viertel der besagten Wellenlänge entspricht.

7. Teildurchlässiger Spiegel nach Anspruch 6, bei welchem der Schutzfilmstapel aus einem Stapel von zwei Filmen (40) aus Siliciumdioxid besteht und eine Gesamtdicke aufweist, die im wesentlichen einer doppelten Viertelwellenlänge entspricht.

8. Teildurchlässiger Spiegel nach einem der vorstehenden Ansprüche, bei welchem

der erste Filmstapel (30) vierzehn Filme umfaßt, mit einer Dicke von im wesentlichen einem Viertel der Laser-Wellenlänge;

der zweite Filmstapel (34) neun Filme umfaßt, deren Dicke geringer ist als +einem Viertel der Laser-Wellenlänge entspricht; und

der dritte Filmstapel (32) acht Filme umfaßt, mit einer Dicke, die im wesentlichen einem Viertel der Laser-Wellenlänge entspricht.

9. Teildurchlässiger Spiegel nach einem der vorstehenden Ansprüche, bei dem die Dicken der Filme (37, 35) aufeinanderfolgend aufgelistet und ausgehend von dem an den ersten Filmstapel (30) angrenzenden Film (37) folgende Werte aufweisen:

0,778 Viertelwellenlänge
0,841 Viertelwellenlänge
0,671 Viertelwellenlänge
0,624 Viertelwellenlänge
0,814 Viertelwellenlänge
0,868 Viertelwellenlänge
0,771 Viertelwellenlänge
0,698 Viertelwellenlänge
0,857 Viertelwellenlänge.

10. Ringlaserkreisel mit einem Resonanz-Laserhohlraum, mit Mitteln (24) zur gegenläufigen Ausbreitung von Strahlen einer bestimmten optischen Wellenlänge innerhalb des Hohlraums sowie mit einer Mehrzahl von Eckspiegeln (14, 16, 18, 20), die innerhalb des Laserhohlraums angeordnet, jeweils ein transparentes, form- und temperaturstabiles Substrat (45) aufweisen, um die Strahlen entlang des Laserhohlraums zu richten, wobei wenigstens einer der Eckspiegel (20) ein teildurchlässiger Spiegel ist, über den ein Teil der Strahlen aus dem Hohlraum nach außen leitbar ist und bei dem der teildurchlässige Spiegel die Merkmale wenigstens eines der vorstehenden Ansprüche aufweist, wobei die Dicke jedes Films in Richtung eines vorgegebenen Auftreffstrahls des Kreisels gemessen ist.

## Revendications

1. Miroir partiellement transparent à utiliser dans un gyroscope (10) à laser en anneau pouvant fonctionner avec un faisceau incident sur le miroir dans une direction prédéterminée et à une longueur d'onde optique prédéterminée, le miroir ayant un substrat (45) sur lequel sont positionnés au moins trois empilages (30, 34, 32) de films optiques, ledit premier empilage (30) de films optiques ayant une pluralité de films optiques formés de films (31) à indice de réfraction élevé alternant avec des films (33) à indice de réfraction inférieur sur ledit substrat (45), chaque film (31, 33) dudit premier empilage de films ayant une épaisseur qui est sensiblement d'un quart de ladite longueur d'onde prédéterminée;

ledit deuxième empilage (34) de films optiques ayant une deuxième pluralité de films optiques constitués de films (37) à indice de réfraction élevé alternant avec des films (37) à indice de réfraction inférieur, positionnés sur ledit premier empilage (30) de films, chaque film (35, 37) dudit deuxième empilage (34) de films ayant une épaisseur qui est différente d'un quart de ladite longueur d'onde prédéterminée ;

ledit troisième empilage (32) de films optiques ayant une pluralité de films optiques constitués de films (41) à indice de réfraction élevé alternant avec des films (39) à indice de réfraction inférieur sur ledit deuxième empilage (34) de films optiques, chaque film (39, 41) dudit troisième empilage de films ayant une épaisseur qui est sensiblement d'un quart de ladite longueur d'onde prédéterminée ;

l'épaisseur de chacun desdits films (31, 33, 35, 37, 39, 41) étant mesurée suivant ladite direction prédéterminée.

2. Miroir partiellement transparent selon la revendication 1, dans lequel chaque film (35, 37) dudit deuxième empilage (34) de films présente une épaisseur qui est inférieure à un quart de ladite longueur d'onde prédéterminée.

3. Miroir partiellement transparent selon la revendication 1 ou 2, dans lequel ledit substrat (45) est formé d'une matière thermiquement et mécaniquement stable.

4. Miroir partiellement transparent selon la revendication 3, dans lequel ledit substrat est en matière du type Zerodur.

5. Miroir partiellement transparent selon l'une quelconque des revendications précédentes, dans lequel ladite matière à indice de réfraction élevé (31, 37) comprend de l'oxyde de titane, et ladite matière ayant un indice de réfraction inférieur (33, 37) comprend de la silice.

**6.** Miroir partiellement transparent selon l'une quelconque des revendications précédentes, comportant un empilage (36) de films protecteurs sur ledit troisième empilage de films, ayant plusieurs films (40, 42), avec au moins le film extérieur en silice, formant au moins un film double où chaque film présente une épaisseur qui est sensiblement d'un quart de ladite longueur d'onde.

**7.** Miroir partiellement transparent selon la revendication 6, dans lequel l'empilage de films protecteurs est un empilage de deux films de silice (40), l'empilage de films protecteurs ayant une épaisseur qui est sensiblement d'un double quart d'onde.

**8.** Miroir partiellement transparent selon l'une quelconque des revendications précédentes, dans lequel :

ledit premier empilage (30) de films contient quatorze films d'une épaisseur de sensiblement un quart de la longueur d'onde laser ;

ledit deuxième empilage (34) de films contient neuf films d'une épaisseur qui est inférieure à un quart de la longueur d'onde laser ; et

ledit troisième empilage (32) de films contient huit films d'une épaisseur qui est sensiblement d'un quart de la longueur d'onde laser.

**9.** Miroir partiellement transparent selon l'une quelconque des revendications précédentes, dans lequel les épaisseurs des films (37, 35) dudit deuxième empilage (34) de films, citées les unes à la suite des autres à partir du film (37) adjacent audit premier empilage (30) de films, sont :

0,778 quart d'onde
0,841 quart d'onde
0,671 quart d'onde
0,624 quart d'onde
0,814 quart d'onde
0,868 quart d'onde
0,771 quart d'onde
0,698 quart d'onde
0,857 quart d'onde

**10.** Gyroscope à laser en anneau ayant une cavité laser résonnante, des moyens (24) destinés à faire propager en sens contraires des faisceaux d'une longueur d'onde optique prédéterminée à l'intérieur de ladite cavité, et plusieurs miroirs d'angle (14, 16, 18, 20) ayant chacun un substrat transparent (45), dimensionnellement stable, thermiquement stable, montés à l'intérieur de ladite cavité laser pour diriger les faisceaux le long de ladite cavité laser, au moins l'un desdits miroirs d'angle (20) étant un miroir partiellement transparent pour permettre le passage d'une partie desdits faisceaux vers l'extérieur de ladite cavité, le miroir partiellement transparent étant conforme à l'une quelconque des revendications précédentes, l'épaisseur de chaque film étant mesurée dans la direction d'un faisceau incident prédéterminé du gyroscope.

Fig. 1.

Fig. 3.

Fig. 2.

EP 0 370 071 B1